# EUROPEAN PATENT SPECIFICATION

(11) **EP 4 199 795 B1**
(45) Date of publication and mention of the grant of the patent: **26.06.2024**
(21) Application number: 20760831.6
(22) Date of filing: 20.08.2020
(51) Int. Cl.: A47L 9/12, A47L 9/14

(54) **COMPACT DUST BAG FOR A VACUUM CLEANER**
KOMPAKTER STAUBBEUTEL FÜR EINEN STAUBSAUGER
SAC À POUSSIÈRE COMPACT POUR ASPIRATEUR

(43) Date of publication of application: 28.06.2023
(73) Proprietor: Aktiebolaget Electrolux, 105 45 Stockholm (SE)
(72) Inventor: MIAN, Peter, 105 45 Stockholm (SE); LEFFLER, Jens, 105 45 Stockholm (SE); SÖRMARK, Christoffer, 105 45 Stockholm (SE)
(74) Representative: Electrolux Group Patents
(86) International application number: PCT/EP2020/073427
(87) International publication number: WO 2022/037786

(56) References cited:
- US-A1- 2007 113 528
- US-A1- 2015 040 343
- US-A1- 2017 296 007

## Description

### Technical field

The present disclosure relates to a dust bag for a vacuum cleaner and to a vacuum cleaner holding the dust bag.

### Background

Dust bags are provided in vacuum cleaners. A dust bag is typically formed by an air-permeable filter material that allows dust laden air to be blown through the dust bag and where the filter material filters out dust from the air which then remains in the dust bag.

The closest prior art is seen in US2017/296007.

Also, US 10,531,772 describes a hand held vacuum cleaner having a filter for filtering debris flowing through the vacuum cleaner.

There is a constant desire to improve dust bags and filters for vacuum cleaners to make them more user-friendly.

### Summary

One object of the present disclosure is therefore to provide a dust container that can be more efficiently used with, in particular, compact vacuum cleaners. This object is achieved by a dust container as set out in the appended claims.

As has been realized by the inventors, it would be advantageous to avoid or reduce contact with dust and dust flying around when handling dust bags. At the same time emptying or replacement of dust bags should be facilitated to encourage more frequent cleaning or replacement of filter media in the dust bag which would improve the efficiency of the vacuum cleaner.

In accordance with a first aspect of the invention, a dust bag for a vacuum cleaner is provided. The dust bag comprises a filter bag of an air-permeable material and a front connector plate comprising a hole section. The dust bag further comprises a sleeve of a flexible material. The filter bag is attached to the front connector plate and the sleeve is provided outside the filter bag. The sleeve is arranged to keep the filter bag in a folded position and the sleeve is arranged to allow the filter bag to expand when air is blown through a hole formed in the hole section of the front connector plate. Hereby a compact dust bag can be provided that is small, compact and easy to handle before use and which when placed in a vacuum cleaner and air is blown through the filter bag of the dust bag is able to expand by the sleeve releasing the filter bag by the force exerted by the air blown through the dust bag by the vacuum cleaner. Finally, the sleeve can act as a hygienic grip when removing the dust bag from the vacuum cleaner after use for replacement or emptying of the dust bag. The sleeve thus has multiple functions that combine to obtain a user-friendly dust bag.

In accordance with one embodiment, the sleeve is formed all around the sides of the filter bag when the filter bag is in the folded position. The sleeve can then be open or closed in the end away from the front connector plate. Hereby the sleeve can completely packet the filter bag when the filter bag is in the compacted position before use prevent damage and safe handling of the filter bag of the dust bag.

In accordance with one embodiment, a guide is arranged on the front connector plate to assist in correctly positioning the dust bag in a vacuum cleaner. Such a guide can facilitate the correct placement of the dust bag in the vacuum cleaner. The guide for example be formed by a flange or aperture in the outer perimeter of the front connector plate. Such a flange can extend all around the perimeter of the front connector plate to further facilitate correction positioning.

A hole in the hole section of the front connector plate can be formed in different ways. For example, the hole can comprise a perforation in the front connector plate that can be used to form a hole in the front connector plate. In another embodiment the hole section comprises a hole in the front connector plate. The hole section can comprise a lid.

In accordance with one embodiment, the sleeve is formed by a paper material. Hereby an easy to handle and easy to recycle dust bag can be obtained.

In accordance with some embodiments the sleeve is made of a non-air permeable material. Hereby the outside of the sleeve will stay clean from dust after use and the dust bag can be removed in a hygienic way without the user having to touch the dust collected in the dust bag.

In accordance with one embodiment, the hole section is provided with a sealing to provide for an air tight connection to a vacuum cleaner when the dust bag is placed in the vacuum cleaner and a hole is opened in the dust bag.

In accordance with one embodiment, the filter bag does not extend further than the front connector plate as seen in a direction perpendicular to the axial direction of the front connector plate.

In accordance with one embodiment, the sleeve is attached to the front connector plate. Hereby the sleeve will stay in place during the use of the dust bag and can then be securely be used as a grip to remove the dust bag after use.

In accordance with one embodiment, the sleeve is folded in an end distanced away from the front connector plate. Hereby an efficient and easy to manufacture mechanism for keeping the filter bag in a compacted position before use is obtained.

In accordance with a second aspect of the invention, a vacuum cleaner having a dust bag holder configured to hold the dust bag in accordance with the above is provided. The dust bag can then be placed in the vacuum cleaner and the vacuum cleaner can comprise such a dust bag whereby easy and efficient handling of the vacuum cleaner and the dust bag used in the vacuum cleaner is enabled.

In accordance with one embodiment the dust bag is placed in the dust bag holder and the vacuum cleaner is then configured to blow air through the dust bag such that air is blown axially from a hole in the front connector plate through the dust bag. Hereby air will be blown straight through from the opening hole of the dust bag when placed inside the vacuum cleaner. This will allow for easier unfolding of the filter bag.

### Brief description of the drawings

Figs. 1a - 1d show views of a vacuum cleaner with a dust bag,
Fig. 2 is a view of a dust bag,
Fig. 3 is a detailed view of a front connector plate of a dust bag,
Fig. 4 is a view illustrating a sleeve of a dust bag,
Figs. 5a - 5b is a view illustrating a folded sleeve in accordance with a first embodiment, and in accordance with a second embodiment,
Figs. 6a - 6b illustrate folding of a sleeve,
Figs 7a - 7b illustrate an alternative embodiment of a sleeve,
Fig. 8 is a view illustrating a dust bag with an expanded filter bag.

### Detailed description

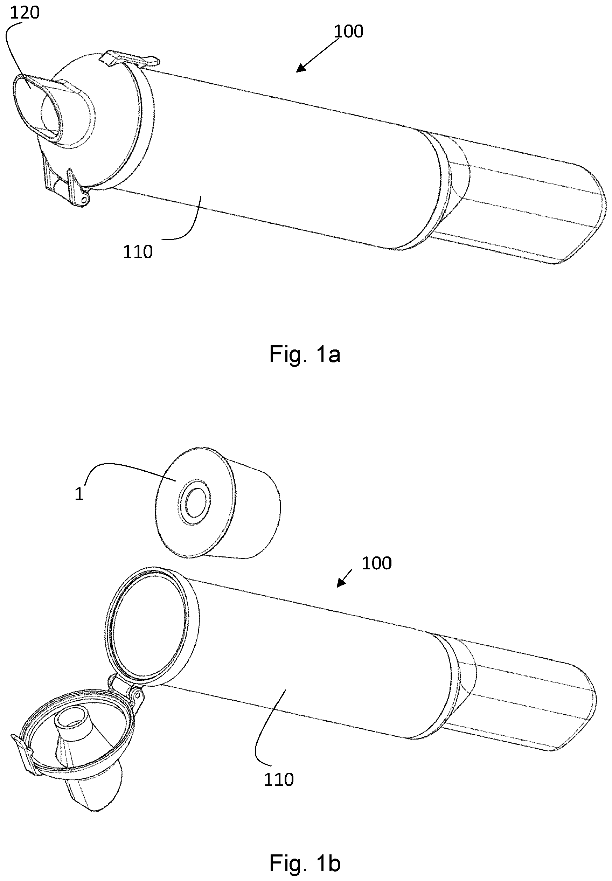

The present disclosure relates to a dust bag for a vacuum cleaner 100, as illustrated with an example in Fig 1a. The vacuum cleaner 100 in Fig. 1a is a small handheld vacuum cleaner, but the invention is equally applicable to other types of vacuum cleaners, in particular compact vacuum cleaners where the amount of space that can be used for holding a dust bag is small. The vacuum cleaner 100 has a holder 110 for holding a dust bag. This holder 110 can also be referred to as a dust bag holder 110. The vacuum cleaner 100 has an air inlet 120 via which dust laden air can enter the vacuum cleaner when an air flow is generated by a motor (not shown) in the vacuum cleaner 100 as is generally known in the art. In Fig. 1b the holder 110 is opened to allow placing a dust bag 1 inside the vacuum cleaner 100. The dust bag 1 is of a compact type that will expand when air is blown though the center of the dust bag as will be described in more detail later.

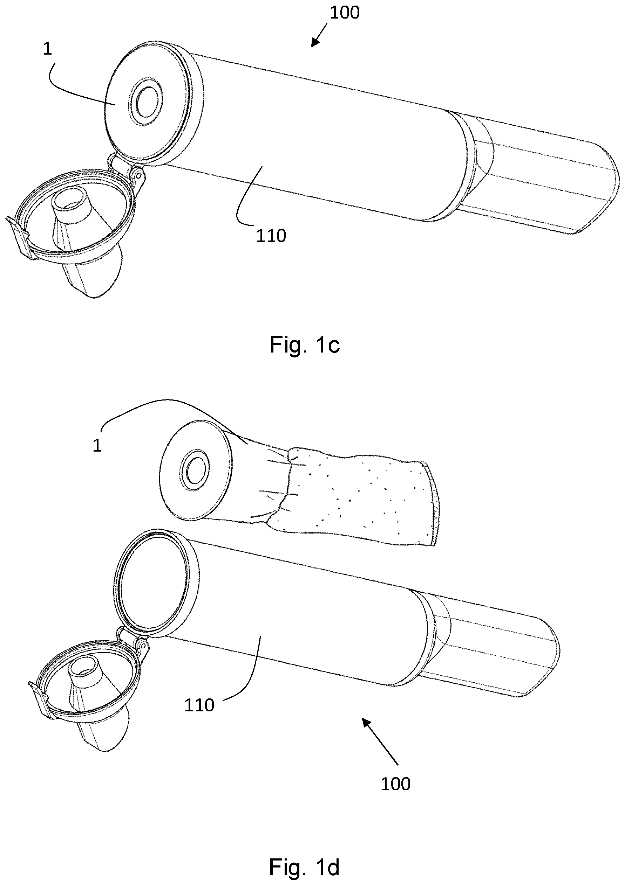

In Fig. 1c the dust bag 1 is shown placed inside the holder 110 of the vacuum cleaner 100. Finally, in Fig. 1d the dust bag 1 is shown when removed from the holder 110 after use of the dust bag 1. As is illustrated the dust bag 1 has expanded when air has been blown through the dust bag 1.

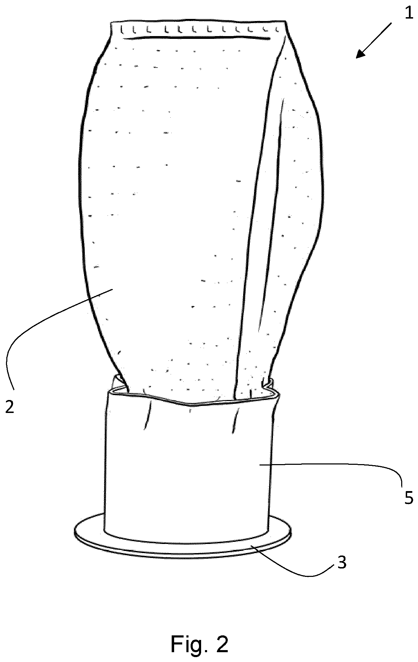

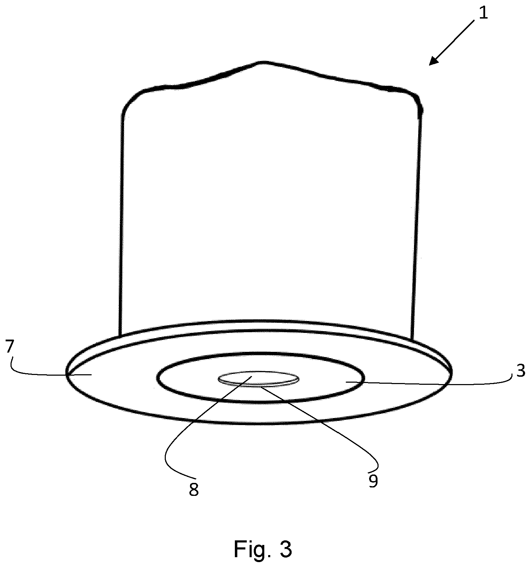

In Fig. 2 a more detailed view of the dust bag 1 is shown. The dust bag 1 is made of an air permeable filter material, as is well known per se. A front connector plate 3 is attached to the dust bag 5, for instance by being glued thereto, and typically can have an opening coinciding with an opening in the dust bag 5, such that the opening of the front connector plate also becomes the opening of the dust bag as a whole. This is illustrated in Fig. 3. Further, a sleeve 5 is provided outside the filter bag 3. The sleeve 5 performs multiple functions when used as will be described in more detail below. The sleeve can be formed by a flexible material, such as a paper material or a textile material. In particular the sleeve 5 can be produced by a material adapted to be folded and which material stays in the folded position when no or only a relatively small outside force acts on the sleeve 5. In accordance with some embodiments the sleeve is made of a non-air permeable material. Hereby the outside of the sleeve will stay clean from dust after use and the dust bag 1 can be removed in a hygienic way without the user having to touch the dust collected in the dust bag 1.

In Fig. 3, a more detailed view in perspective of the dust bag 1 is shown illustrating the design of the front connector plate 3. The front connector plate 3 can be configured to position a hole 8 of the dust bag 1 in a correct manner in relation to an air inlet in the body of a vacuum cleaner. The hole is formed in a hole section of the connector plate 3 and can be formed in different ways. For example, the hole can comprise a perforation in the front connector plate 3. In another embodiment the hole section comprises a hole in the front connector plate 3. The hole section can also comprise a lid.

Correct positioning of the front connector plate 3 can be carried out by sliding or pushing the dust bag 1 into a holder or socket in the vacuum cleaner. The front connector plate 3 can then fix the dust bag 1 in a correct position. This operation positions the opening (hole) 8 correctly to receive a flow of dust laden air thereby entering the dust bag 1, which is capable to remove most of the dust from the air flow.

The front connector plate 3 can in accordance with some embodiments have a circular shape. Hereby the dust bag can be positioned in all directions. This can make the dust bag easy to place in the vacuum cleaner. Also, the air flow through the dust bag can be improved by making the front connector plate and or the filter bag with a circular cross section in a plane perpendicular the direction in which air is blown through the dust bag when in use. A gasket 9 may be attached to the front connector plate 3 at the opening so as to provide a sealing function, reducing leaks in the flow from an inlet to the dust bag 1. Further, to facilitate insertion of the dust bag 1 in the vacuum cleaner, the front connector plate 3 can be provided with a guide 7 arranged on the front connector plate 3 to assist in correctly positioning the dust bag in a vacuum cleaner. The guide can in accordance with some embodiments be formed by a flange or aperture in the outer perimeter of the front connector plate. The flange can extend all around the perimeter of the front connector plate 3. In other embodiments the guide can be formed by the shape of the sleeve. If the sleeve has a conical or pyramid shape the dust bag can fit easily inside a dust bin of a vacuum cleaner with a shape corresponding to the shape of the dust bag 1. In accordance with some embodiments, the front connector plate 3 can have a seal or act as a sealing between the lid and the dust bag holder.

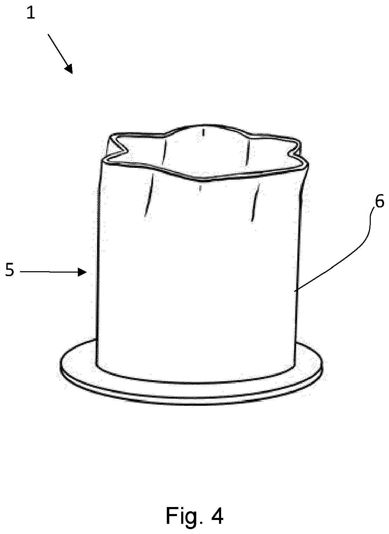

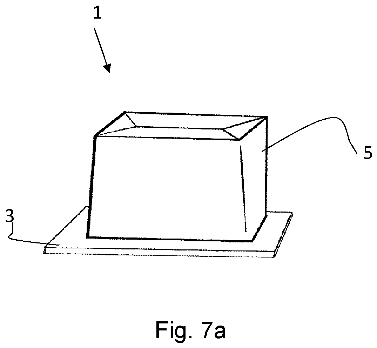

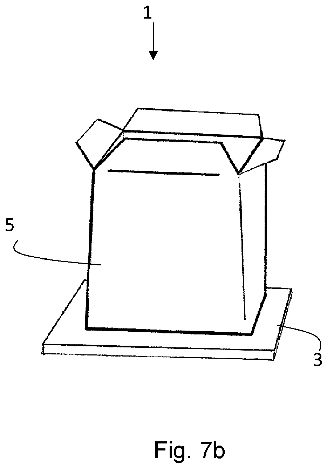

In Fig. 4, a more detailed view in perspective of the dust bag 1 is shown illustrating the design of the sleeve 5. The sleeve 5 is a bottomless cover that is designed to at least partly surround the filter bag of the dust bag 1. The sleeve 5 in Fig 4 is generally cylinder shaped. However, it is also envisaged that the sleeve can form other geometrical shapes when expanded such as conical, pyramid or cubical shapes. In Figs. 7a and 7b a block shaped sleeve is shown. The front connector plate can then in some embodiments be rectangular. The sleeve can be made from a number of materials, preferably non air-permeable, such as cardboard or paper, or recycled plastics. The outer walls 6 can be used as grip to avoid contact to the filter material. Hereby the dust bag can be replaced/emptied and filters can be replaced by a user without being exposed to dust.

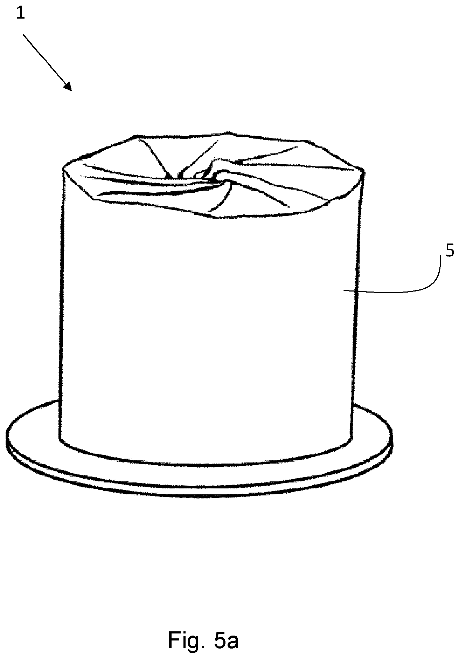

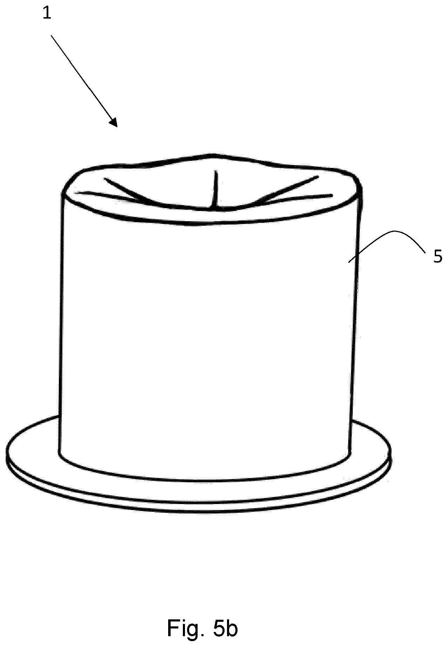

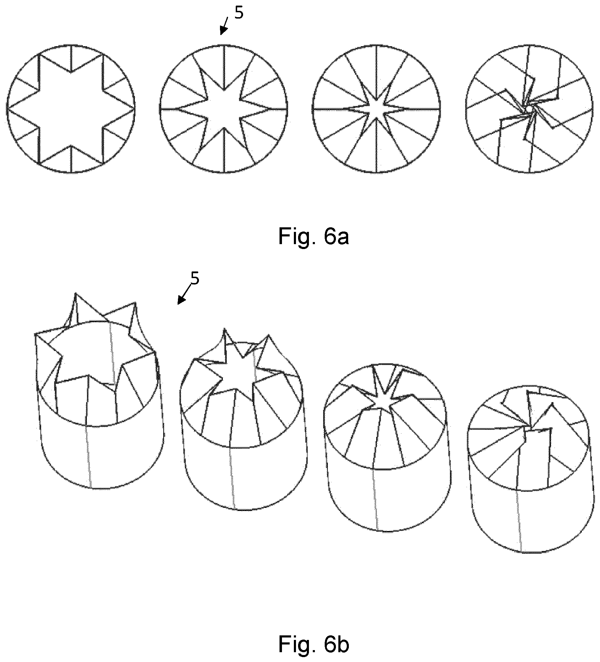

The provision of the sleeve 5 also makes it possible to compact the dust bag 1 before it is used. This is illustrated in Figs. 5a and 5b. In Fig 5a, a compacted dust bag 1 in accordance with the above in accordance with a first embodiment is shown. The filter bag (not visible in Fig. 5a) is compacted into a folded position. The open part of the sleeve 5 is closed to keep the filter bag 2 in its folded, compacted position. In the embodiment of Fig. 5a the sleeve is closed in its open part by folding the open part in a first pattern In which six or more corners/mountain folds are created and folded towards the middle of the sleeve opening with a slight off-set to the same side for all so that the tip of the mountain fold interlocks with the one next to it when the tips are pushed below the edge of the sleeve fold. This is further shown in Figs 6a and 6b where different stages of the folding of the sleeve 5 is shown in different views.

In Fig 5b a compacted dust bag 1 in accordance with the above in accordance with a second embodiment is shown. The filter bag (not visible in Fig. 5b) is compacted into a folded position. The open part of the sleeve 5 is closed to keep the filter bag 2 in its folded, compacted position. In the embodiment of Fig. 5b the sleeve is closed in its open part by folding the open part in a second pattern in which six or more corners/mountain folds are created and is folded towards the middle of the sleeve opening. The tip of the mountain fold interlocks when they are pushed below the edge of the sleeve fold. The fold of Fig. 5b typically requires a slightly stiffer material.

Thus, the sleeve 5 is arranged to keep the filter bag in a folded position. At the same time the sleeve 5 is arranged to allow the filter bag 2 to expand when air is blown through the hole 8 formed in the hole section of the front connector plate 3 as will be described in more detail below. The dust bag is particularly well suited to allow for air to be blown in an axial direction from the hole section back towards the folded part of the sleeve 5. In other words, air is advantageously blown straight through the dust bag 1. Preferably, when the filter bag 2 is in an unfolded state, the filter bag 2 does not extend further than the front connector plate as seen in a direction perpendicular to the axial direction of the front connector plate.

In the embodiments shown in Figs. 5a and 5b, the sleeve 5 is formed all around the filter bag 2 when the filter bag is in the folded position. However, it is also envisaged that the sleeve can be formed only partially around the filter bag 2 as long as the sleeve 5 allows for the filter bag to be kept in a folded, compacted position before air is blown through the dust bag 1.For example, in one embodiment the sleeve 5 extends over the sides of the filter bag 2. It is further envisaged that the sleeve 5 can be closed in some other ways than by folding such as by glue. In another embodiment an adhesive lid can be glued to the sleeve to retain the filter bag in the folded, compacted position before air is blown through the dust bag 1. The lid is then removed by the air blown through the filter bag and releases the filter bag. The lid can also be attached to the filter bag and glued to the sleeve.

Further, Other folding patterns can also be used to close the sleeve around the filter bag 2 when the sleeve is folded to keep the filter bag kept in the folded, compacted position before air is blown through the dust bag 1. For example edges of lids of the sleeve opening can be folded to interlock when pushed together For example, several flaps can be provided at the end of the sleeve, each flap can be folded down over the previous one until the last one is left, this one is folded under the first flap and thus locking the fold.

In Figs 7a and 7b, an embodiment where the sleeve 5 has a rectangular cross section and where the front connector plate is rectangular is shown. The sleeve 5 is here closed by folding flaps to lock the sleeve before use.

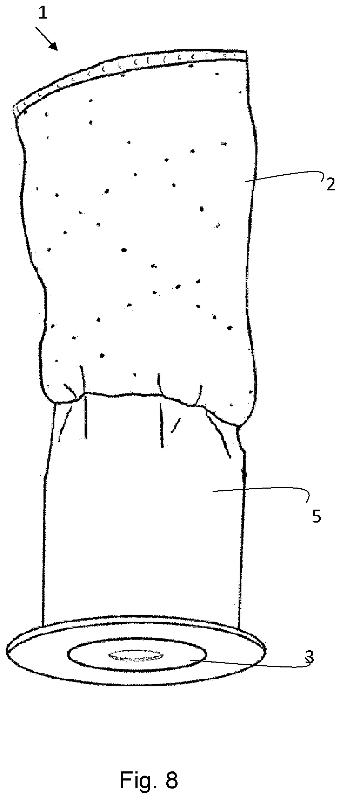

When air is blown through the hole of the front connector plate 3 of the dust bag 1, the sleeve 5 opens and allows for the filter bag 2 to expand. This is shown in Fig. 8.

By providing a dust bag in accordance with the teachings herein it possible to combine the convenience, hygienic properties and energy efficiency of a conventional dust bag solution but without the same (large) the space requirement. At the same time, it enables easier replacement of the dust bag. Moreover, the user does not need to be in contact with dust during dust bag replacement, since the sleeve can act as a grip for the user when handling the used dust bag. Before use the dust bag is reduced in size and can have a very compact format indeed. The dust bag can be used in any type of vacuum cleaner.

## Claims

1. A dust bag (1) for a vacuum cleaner comprising:
a filter bag (2) of an air-permeable material
a front connector plate (3) comprising a hole section,
wherein a sleeve (5) is provided,
wherein, the filter bag is attached to the front connector plate and the sleeve is provided outside the filter bag, and wherein
the sleeve is arranged to keep the filter bag in a folded position and where the sleeve is arranged to allow the filter bag to expand when air is blown through a hole (8) formed in the hole section of the front connector plate,
**characterized in that** the sleeve (5) is of a flexible material.

2. The dust bag (1) according to claim 1, wherein the sleeve (5) is formed all around the sides of the filter bag when the filter bag is in the folded position.

3. The dust bag (1) according to claim 1 or 2, wherein a guide (7) is arranged on the front connector plate to assist in correctly positioning the dust bag in a vacuum cleaner.

4. The dust bag (1) according to claim 3, wherein the guide is formed by a flange and/or aperture in the outer perimeter of the front connector plate.

5. The dust bag (1) according to claim 4, wherein the flange extends all around the perimeter of the front connector plate.

6. The dust bag (1) according to any one of claims 1 -5, wherein the hole section comprises a perforation in the front connector plate that can be used to form a hole in the front connector plate.

7. The dust bag (1) according to any one of claims 1 -5, wherein the hole section comprises a hole in the front connector plate.

8. The dust bag (1) according to any one of claims 1 - 6, wherein the filter bag (2) does not extend further than the front connector plate (3) as seen in a direction perpendicular to the axial direction of the front connector plate.

9. The dust bag (1) according to any one of claims 1 -8, wherein the sleeve is formed by a paper material.

10. The dust bag (1) according to any one of claims 1 -9, wherein the sleeve is made of a non-air permeable material.

11. The dust bag (1) according to any one of claims 1 -10, wherein the hole section comprises a sealing to provide for an air tight connection to a vacuum cleaner when the dust bag is placed in the vacuum cleaner and a hole is opened in the dust bag.

12. The dust bag (1) according to any one of claims 1 -11, wherein the sleeve is attached to the front connector plate.

13. The dust bag (1) according to any one of claims 1 -12, wherein the sleeve is folded in an end distanced away from the front connector plate.

14. A vacuum cleaner (100) comprising a dust bag holder (110), wherein the dust bag holder (110) is configured to receive a dust bag according to any of claims 1 - 13.

15. A vacuum cleaner (100) according to claim 14, wherein the dust bag is placed in the dust bag holder and wherein the vacuum cleaner is configured to blow air through the dust bag such that air is blown axially from a hole in the front connector plate through the dust bag.

## Patentansprüche

1. Staubbeutel (1) für einen Staubsauger, umfassend:
einen Filterbeutel (2) aus einem luftdurchlässigen Material
eine vordere Anschlussplatte (3), die einen Lochabschnitt umfasst,
wobei eine Manschette (5) bereitgestellt ist,
wobei der Filterbeutel an der vorderen Anschlussplatte angebracht ist und die Manschette außerhalb des Filterbeutels bereitgestellt ist, und wobei
die Manschette dazu angeordnet ist, den Filterbeutel in einer gefalteten Position zu halten, und wobei die Manschette dazu angeordnet ist, dem Filterbeutel zu ermöglichen, sich auszudehnen, wenn Luft durch ein in dem Lochabschnitt der vorderen Anschlussplatte gebildetes Loch (8) geblasen wird,
**dadurch gekennzeichnet, dass** die Manschette (5) aus einem flexiblen Material besteht.

2. Staubbeutel (1) nach Anspruch 1, wobei die Manschette (5) vollständig um die Seiten des Filterbeutels herum gebildet ist, wenn sich der Filterbeutel in der gefalteten Position befindet.

3. Staubbeutel (1) nach Anspruch 1 oder 2, wobei eine Führung (7) auf der vorderen Anschlussplatte angeordnet ist, um ein korrektes Positionieren des Staubbeutels in einem Staubsauger zu unterstützen.

4. Staubbeutel (1) nach Anspruch 3, wobei die Führung durch einen Flansch und/oder einen Durchgang im Außenumfang der vorderen Anschlussplatte gebildet ist.

5. Staubbeutel (1) nach Anspruch 4, wobei sich der Flansch vollständig um den Umfang der vorderen Anschlussplatte herum erstreckt.

6. Staubbeutel (1) nach einem der Ansprüche 1-5, wobei der Lochabschnitt eine Perforation in der vorderen Anschlussplatte umfasst, die zum Bilden eines Lochs in der vorderen Anschlussplatte verwendet werden kann.

7. Staubbeutel (1) nach einem der Ansprüche 1-5, wobei der Lochabschnitt ein Loch in der vorderen Anschlussplatte umfasst.

8. Staubbeutel (1) nach einem der Ansprüche 1-6, wobei sich der Filterbeutel (2) bei Ansicht in einer Richtung senkrecht zur axialen Richtung der vorderen Anschlussplatte nicht weiter als die vordere Anschlussplatte (3) erstreckt.

9. Staubbeutel (1) nach einem der Ansprüche 1-8, wobei die Manschette aus einem Papiermaterial gebildet ist.

10. Staubbeutel (1) nach einem der Ansprüche 1-9, wobei die Manschette aus einem nicht luftdurchlässigen Material besteht.

11. Staubbeutel (1) nach einem der Ansprüche 1-10, wobei der Lochabschnitt eine Dichtung umfasst, um eine luftdichte Verbindung zu einem Staubsauger bereitzustellen, wenn der Staubbeutel in dem Staubsauger platziert ist und ein Loch in dem Staubbeutel geöffnet ist.

12. Staubbeutel (1) nach einem der Ansprüche 1-11, wobei die Manschette an der vorderen Anschlussplatte angebracht ist.

13. Staubbeutel (1) nach einem der Ansprüche 1-12, wobei die Manschette in einem Ende gefaltet ist, das von der vorderen Anschlussplatte beabstandet ist.

14. Staubsauger (100), umfassend einen Staubbeutelhalter (110), wobei der Staubbeutelhalter (110) dazu ausgelegt ist, einen Staubbeutel nach einem der Ansprüche 1-13 aufzunehmen.

15. Staubsauger (100) nach Anspruch 14, wobei der Staubbeutel in dem Staubbeutelhalter platziert ist und wobei der Staubsauger dazu ausgelegt ist, derart Luft durch den Staubbeutel zu blasen, dass Luft axial von einem Loch in der vorderen Anschlussplatte durch den Staubbeutel geblasen wird.

## Revendications

1. Sac à poussière (1) pour un aspirateur comprenant :
un sac filtrant (2) en matériau perméable à l'air une plaque de raccord avant (3) comprenant une section de trou,
dans lequel un manchon (5) est fourni,
dans lequel le sac filtrant est fixé à la plaque de raccord avant et le manchon est fourni à l'extérieur du sac filtrant, et dans lequel
le manchon est agencé pour maintenir le sac filtrant dans une position pliée et où le manchon est agencé pour permettre au sac filtrant de s'étendre lorsque de l'air est soufflé à travers un trou (8) formé dans la section de trou de la plaque de raccord avant,
**caractérisé en ce que** le manchon (5) est en matériau souple.

2. Sac à poussière (1) selon la revendication 1, dans lequel le manchon (5) est formé tout autour des côtés du sac filtrant lorsque le sac filtrant est dans la position pliée.

3. Sac à poussière (1) selon la revendication 1 ou 2, dans lequel un guide (7) est agencé sur la plaque de raccord avant pour faciliter le positionnement correct du sac à poussière dans un aspirateur.

4. Sac à poussière (1) selon la revendication 3, dans lequel le guide est formé par une bride et/ou une ouverture dans le périmètre externe de la plaque de raccord avant.

5. Sac à poussière (1) selon la revendication 4, dans lequel la bride s'étend tout autour du périmètre de la plaque de raccord avant.

6. Sac à poussière (1) selon l'une quelconque des revendications 1 à 5, dans lequel la section de trou comprend une perforation dans la plaque de raccord avant qui peut être utilisée pour former un trou dans la plaque de raccord avant.

7. Sac à poussière (1) selon l'une quelconque des revendications 1 à 5, dans lequel la section de trou comprend un trou dans la plaque de raccord avant.

8. Sac à poussière (1) selon l'une quelconque des revendications 1 à 6, dans lequel le sac filtrant (2) ne s'étend pas plus loin que la plaque de raccord avant (3) tel qu'observé depuis une direction perpendiculaire à la direction axiale de la plaque de raccord avant.

9. Sac à poussière (1) selon l'une quelconque des revendications 1 à 8, dans lequel le manchon est formé par un matériau papier.

10. Sac à poussière (1) selon l'une quelconque des revendications 1 à 9, dans lequel le manchon est constitué d'un matériau non perméable à l'air.

11. Sac à poussière (1) selon l'une quelconque des revendications 1 à 10, dans lequel la section de trou comprend un joint pour fournir un raccord étanche à l'air à un aspirateur lorsque le sac à poussière est placé dans l'aspirateur et qu'un trou est ouvert dans le sac à poussière.

12. Sac à poussière (1) selon l'une quelconque des revendications 1 à 11, dans lequel le manchon est fixé à la plaque de raccord avant.

13. Sac à poussière (1) selon l'une quelconque des revendications 1 à 12, dans lequel le manchon est plié dans une extrémité écartée de la plaque de raccord avant.

14. Aspirateur (100) comprenant un support de sac à poussière (110), dans lequel le support de sac à poussière (110) est configuré pour recevoir un sac à poussière selon l'une quelconque des revendications 1 à 13.

15. Aspirateur (100) selon la revendication 14, dans lequel le sac à poussière est placé dans le support de sac à poussière et dans lequel l'aspirateur est configuré pour souffler de l'air à travers le sac à poussière de telle sorte que de l'air est soufflé axialement depuis un trou dans la plaque de raccord avant à travers le sac à poussière.
